# EUROPEAN PATENT APPLICATION

(11) **EP 0 765 772 A1**
(43) Date of publication of application: **02.04.1997**
(21) Application number: 95921998.1
(22) Date of filing: 20.06.1995
(51) Int. Cl.: B60K 17/10, B62D 11/04

(54) **RUNNING CONTROL CIRCUIT FOR A HYDRAULICALLY DRIVEN RUNNING DEVICE**

(30) Priority: 21.06.1994 JP 138619/94
(71) Applicant: KOMATSU LTD., Minato-ku Tokyo 107 (JP)
(72) Inventor: ISHIZAKI, Naoki Oyama Factory of Kabushiki K., Tochigi-ken 323 (JP); TAKANO, Toshiro Oyama Factory of Kabushiki K., Tochigi-ken 323 (JP)
(74) Representative: Grünecker, Kinkeldey, Stockmair & Schwanhäusser Anwaltssozietät
(86) International application number: PCT/JP95/01227
(87) International publication number: WO 95/35220

(57) **Abstract**

A running control circuit for a hydraulically driven running device comprising a hydraulic pump, parallel left- and right-hand directional control valves provided along a discharge path of the hydraulic pump, sets of first left- and right-hand circuits and second left- and right-hand circuits formed by connecting output sides of the left- and right-hand directional control valves to left- and right-hand running hydraulic motors, respectively, and pressure compensating valves each provided along the first and second circuits for controlling an opening area between an inlet port and an outlet port thereof by virtue of the difference in pressure between its own loading pressure and the highest of the loading pressures of the left- and right-hand running hydraulic motors for compensation of pressure, wherein the pressure compensating valves are constructed to function such that they establish communications between the first left- and right-hand circuits and between the second left- and right-hand circuits via a communication path, respectively, when compensating for hydraulic oil, while they cut off communications between the first left- and right-hand circuits and between the second left- and right-hand circuits when a communication between the inlet and outlet ports is cut off or substantially cut off.

## Description

### TECHNICAL FIELD

The present invention relates to a travelling control circuit for a hydraulically driven type of travelling control apparatus for use in a construction machine and so forth.

### BACKGROUND ART

A hydraulically driven type of travelling apparatus is designed to be driven with a pair of hydraulic motors which are disposed at a right hand side and a left hand side for right hand side driving wheels and a left hand side driving wheels, respectively, for a vehicle travelling purpose. The right hand side and left hand side traveling purpose hydraulic motors are supplied each with a pressurized discharge fluid from a hydraulic pump, by means of a right hand side and a left hand side directional control valve, respectively.

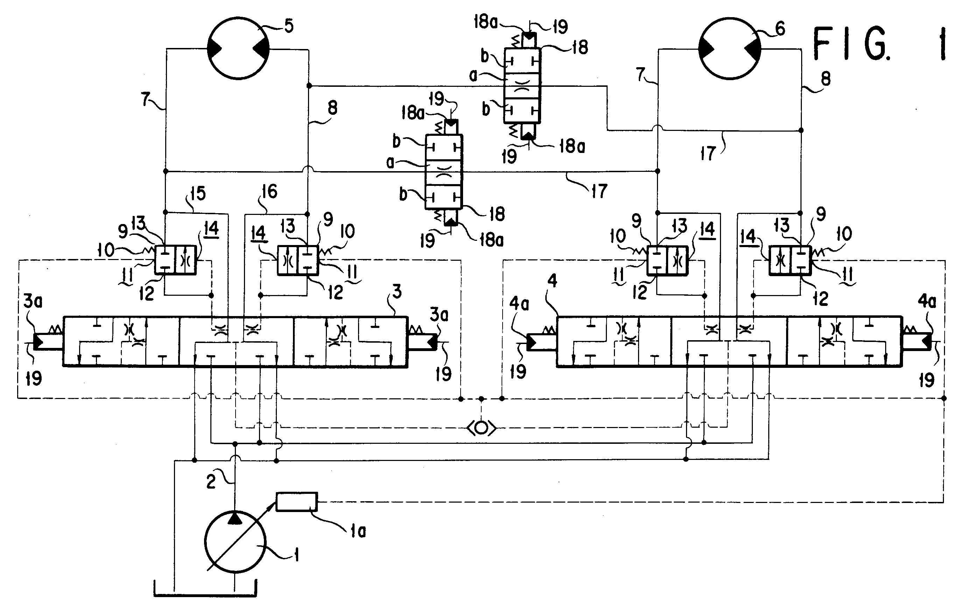

There has been known a travelling control circuit for such a hydraulically driven type of travelling apparatus in the prior art, as shown in Fig. 1, in which a single hydraulic pump is provided.

In such a travelling control apparatus, a hydraulic pump 1 has a discharge path 2 that is provided with a left hand side directional control valve 3 and a right hand side directional control valve 4 which are disposed in parallel to each other. The left hand side directional control valve 3 and the right hand side directional control valve 4 are coupled with a left hand side travelling purpose hydraulic motor 5 and a right hand side travelling purpose hydraulic motor 5 in a first circuit 7 and a second circuit 8 which are arranged at the left hand side and the right hand side, respectively. A pressure compensating valve 9 is provided in each of the first circuit 7 and the second circuit 8 so as to be set responsive to the higher of load pressures of the left hand side travelling purpose hydraulic motor 5 and the right hand side travelling purpose hydraulic motor 6.

More specifically, each of the pressure compensating valves 9 and 9 is designed so as to be thrusted in a direction of disconnecting an inlet port 12 and an outlet port 13 from each other with the resilient force of a spring 10 and under a maximum load pressure that acts on a first pressure receiving portion 11 and so as to be thrusted in a direction of communicating the inlet port 12 and the outlet port 13 with each other under its own load pressure that acts on a second pressure receiving portion 14. Hence, the area of opening between the inlet port 12 and the outlet port 13 of each of the pressure compensating valves 9 and 9 will be decreased as the difference between the maximum load pressure and the own load pressure is increased, thus compensating for a pressure in the inlet side.

Since this causes the pressurized discharge fluid from a single hydraulic pump to be supplied to the left hand side travelling purpose hydraulic motor 5 and the right hand side travelling purpose hydraulic motor 6 at the same time whilst compensating for a pressure with the pressure compensating valves 9 and 9, it ensues that if the left hand side travelling purpose hydraulic motor 5 and the right hand side travelling purpose hydraulic motor 6 are different in their load pressures, a pressurized discharge fluid can be supplied to the left hand side hydraulic motor 5 and the right hand side hydraulic motor 6.

At this point, it should be noted that a first auxiliary circuit 15 and a second auxiliary circuit 16 are each designed to communicate the outlet port side of the pressure compensating valve 9 with a reservoir port of the left hand side directional control valve 3, the right hand side directional control valve 4. Also, it should be noted that a capacity control unit 1a is provided for capacity controlling the hydraulic pump 1 in accordance with a load pressure.

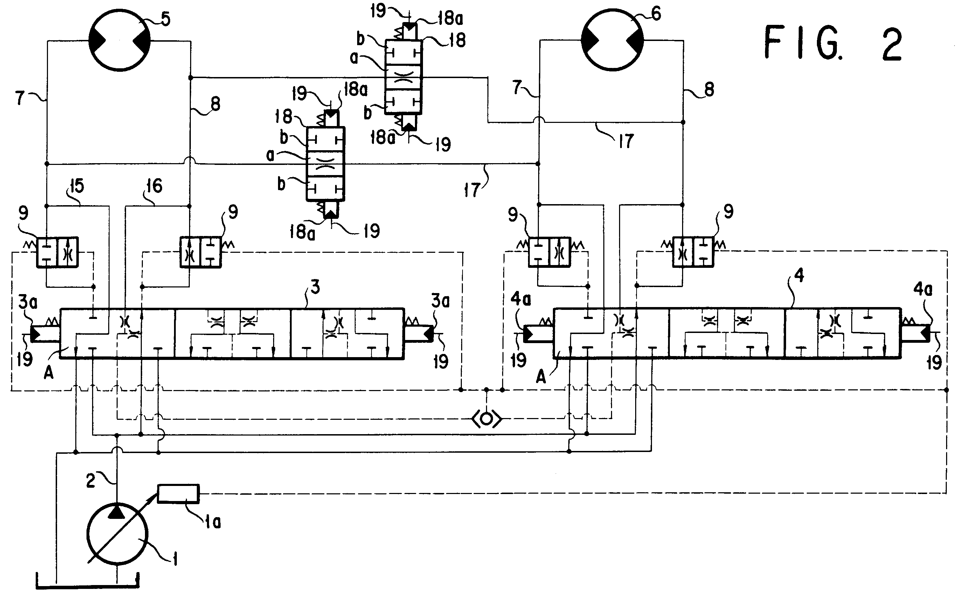

Assume now that the foregoing travelling control arrangement is adopted. Then, if the left hand directional control valve 3 and the right hand directional control valve 4 being advanced to directly travel to the first position A as shown in Fig. 2, have different supply flows to the left hand travelling purpose hydraulic motors 5 and the right hand travelling purpose hydraulic motor 6, a travelling curve will be generated to reduce its direct travellability. Then, as shown in Fig. 1, it is configured that the left hand side first circuit and right hand side first circuit 7 and 7 and the left hand side second circuit and right hand side second circuit 8 and 8 are short circuited each with a shot circuit path 17, each short circuit path 17 is provided with a travelling communicating path 18 and the travelling communicating paths are made at the communicating positions a and a to be identical in supplying a flow quantity to the left hand side and the right hand side travelling purpose hydraulic motors 5 and 6 at the time of direct traveling and when the travelling hydraulic motors 5 and 6 are turning leftwards and rightwards the travelling communicating valves 18 and 18 to lie at the blocking positions 18 and 18.

In such a travelling control circuit, a pair of travelling communicating valves 18 and 18 will be necessary and its cost will be enhanced.

In such a travelling control circuit, it should also be noted that it is necessary for each of the travelling communicating valves 18 and 18 to switchingly operate between the communicating position a and the blocking position b synchronously with the switching operation of the directional control valves 3 and 4.

For this reason, it has been suggested to cause the traveling communication valve 18 to be switchingly operated under a pressure acting on its pressure receiving portion 18a and also to couple a pilot pressure supply circuit 19 to the pressure receiving portion 18a and the respective pressure receiving portions 3a and 4a of the left hand side directional control valve 3 and the right hand side directional control valve 4. Accordingly, beyond the pair of short circuit paths 17 and 17, the four pilot pressure supply circuits 19 become to be needed to be necessary to altogether complicate the entire circuit.

In view of the foregoing problems, it is the object of the present invention to provide a travelling control circuit for a hydraulically driven type of travelling apparatus whereby the two travelling communication vales are made unnecessary to lessen the entire cost and whereby a pilot pressure fluid supply is made unnecessary to simplify its entire circuit.

### SUMMARY OF THE INVENTION

In order to achieve the object mentioned above, there is provided in accordance with the present invention, a travelling control circuit for a hydraulically driven type of travelling apparatus, characterized in that it comprises: a hydraulic pump; a left hand side directional control valve and a right hand side directional control valve which are provided in parallel to each other in a discharge path of the said hydraulic pump; a pair of a left hand side first circuit and a left hand side second circuit and a pair of a right hand side first circuit and a right hand side second circuit in which the respective output sides of the said left hand side and right hand side directional control valves are connected to a left hand side travelling purpose hydraulic motor and a right hand side travelling purpose hydraulic motor, respectively; and a pressure compensating valve that is provided with each of the said first circuits and each of the said second circuits for controlling the area of an opening between an inlet port and an outlet port thereof in response to a difference in pressure between a self load pressure and a maximum load pressure of the load pressures of said left hand side and right hand side travelling purpose hydraulic motors, thereby compensating for a pressure in the fluid, and
characterized in that said pressure compensating valves are adapted to have a function, when the pressurized fluid is compensated for, to communicate via respective paths of communication between said left hand side and right hand first circuits and between said left hand side and right hand side second circuits, and to have a function, when a communication between said inlet port and said outlet port is blocked or substantially blocked, to block a communication between said left hand side and right hand side first circuits and a communication between said left hand side and right hand side second circuits, respectively.

According to the configuration mentioned above, it will be seen that a communication can be established each between the left hand side and right hand side first circuits and the left hand side and right hand side second circuits by virtue of the pressure compensating valve that is provided in either of the first circuits and the second circuits when a left hand side travelling purpose hydraulic motor and a right hand side traveling purpose hydraulic motor are to be supplied with a pressurized fluid in order to assume a linear travel of the travelling apparatus. It follows, therefore, that a linearity of travel of the said apparatus can be enhanced owing to the fact that an identicality of the amount of a pressurized fluid supplied to the left hand side travelling purpose hydraulic motor and the right hand side travelling purpose hydraulic motor are assured.

It can accordingly be seen that since a pair of travelling purpose valves of communication are made unnecessary, the apparatus will be reduced in cost. In addition, since a circuit tailored for a pilot pressure fluid is made unnecessary, the circuit system itself can be simplified.

Also, in the construction mentioned above, it is preferred that each of the said pressure compensating valves should comprise:
a valve body;
a bore formed in the said valve body and having a first port and a second port for establishing a communication between the said inlet port and the said outlet port and a communication between a load pressure introducing port and the said outlet port;
a valve adapted to be slidably inserted into the said bore for establishing and blocking a communication between the said inlet port and the said outlet port and capable of being thrusted in a direction of the communication under a pressure at the said inlet port; and
a piston adapted to be slidably inserted into the said bore and capable of thrusting under a pressure at the said load pressure introducing port and under a resilient force by a spring the said valve in its blocking position and capable of being thrusted in the other direction by the said valve, and
that:
the said piston should so configured that when it has had a slide to its displacement end and substantially to its displacement end in the said first mentioned direction it may block a communication between the said first port and said second port and when it has been thrusted by a predetermined distance in the second mentioned direction it may establish a communication between the said first port and the said second port.

It is further desirable that the said piston is formed therein with a passage of communication for establishing a communication between the said first port and the said second port when such a communication is to be established therebetween.

### BRIEF EXPLANATION OF THE DRAWINGS

The present invention will better be understood from the following detailed description and the drawings attached hereto showing certain illustrative embodiments of the present invention. In this connection, it should be noted that such embodiments as illustrated in the accompanying drawings are intended in no way to limit the present invention, but to facilitate an explanation and understanding thereof.

In the accompanying drawings:
Fig. 1 is a circuit diagram of a travelling control circuit of a hydraulically driven type of travelling apparatus in the prior art;
Fig. 2 is a diagrammatic view illustrating a status in which the apparatus is travelling linearly with the above mentioned traveling control circuit in the prior art;
Fig. 3 is a diagrammatic view illustrating a certain embodiment of the travelling control circuit of a hydraulically driven type of travelling apparatus, according to the present invention;
Fig. 4 is a detailed cross sectional view of a pressure compensating valve that can be used in the above mentioned embodiment of the present invention;
Fig. 5 is a detailed cross sectional view showing a state in which the above mentioned pressure compensating valve is being operated; and
Fig. 6 is a diagrammatic view showing a state at a linear travel in the above mentioned embodiment.

### BEST MODES FOR CARRYING OUT THE INVENTION

Hereinafter, suitable embodiments of the present invention with respect to a travelling control circuit of a hydraulically driven type of travelling apparatus will be set forth with reference to the accompanying drawings hereof.

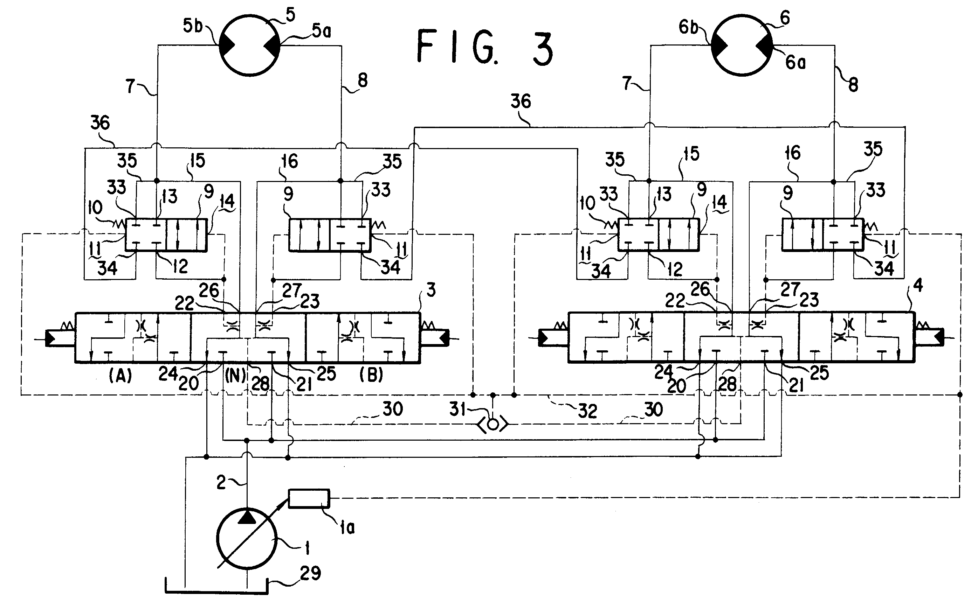

A detailed explanation will now be given of a certain embodiment of the present invention with references to Fig. 3ff. The same components or members as in the prior art are designated by the same reference numerals.

A hydraulic 1 has a discharge path 2 that is connected to the respective inlet sides of a pair of left hand side and right hand side directional control valves 3 and 4 which are arranged in parallel to each other. The respective outlet sides of the left hand side directional control valve 3 and the right hand side directional control valves 4 are connected, via a left hand side first circuit 7 and a left hand side second circuit 8 in a pair on the one hand hand and a right hand side first circuit 7 and a right hand side second circuit 8 in a pair on the other hand, to a left hand side traveling purpose hydraulic motor 5 and a right hand side traveling purpose hydraulic motor 6, respectively. Each of the first circuits 7 and the second circuits 8 is provided therein with a pressure compensating valve 9, respectively.

The left hand side directional control valve 3 mentioned above is provided with a first and a second inlet port 20 and 21, a first and a second actuator port 22 and 23, a first and a second reservoir port 24 and 25, a first and a second return port 26 and 27, and a load pressure detecting port 28. And, the discharge path 2 of the said hydraulic pump 1 is connected to the said first and second inlet ports 20 and 21; the said first and second circuits 7 and 8 are connected to the said first and second actuator ports 22 and 23, respectively; the said first and second reservoir ports 24 and 25 are connected to the said reservoir 29; the said first and second return ports 26 and 27 are connected to the said first and second auxiliary ports 15 and 16, respectively; and to the said said load pressure detecting port 28 there is connected a load pressure detecting path 30.

When the above mentioned left hand side directional control valve 3 lies at its neutral position N, a communication between the said first and second inlet ports 20 and 21 on the one hand and the said first and second actuator ports 22 and 23 will be blocked whereas each of the communications of the said first reservoir port 24 with the said first return port 26, of the first reservoir port 24 with the said first actuator port 22 via a throttle, of the second reservoir port 25 with the said second return port 27, of the said second reservoir port 25 with said second actuator port 23 via throttle, and of the said load pressure detecting port 28 with the said first and second reservoir ports 24 and 25 will be established.

When the said left hand side directional control valve 3 lies at its first position A, a communication between the said first inlet port 20 and the said actuator port 22 will be blocked whereas each of the communications of the second inlet port 21 with the said second actuator port 23, of the said first reservoir port 24 with the said first return port 26, and the second actuator port 23 and the said second return port 27, each via a throttle, with the said load pressure detecting port 28 will be established and the said second reservoir port 25 will be blocked.

When the said left hand side directional control valve 3 takes its second position B, the said first inlet port 20 will be allowed to communicate with the said first actuator port 22, further with the said first inlet port 20 communicating, each via a throttle, with the said first return port 26 and the said load pressure detecting port 28, and the said second return port 27 communicating with the said second reservoir port 25 whereas each of the said second inlet port 21, the said second actuator port 23 and the said first reservoir port 24 will be blocked, respectively.

The said right hand side directional control valve 4 has a construction which is identical to that of the said left hand side directional control valve 3. The said load pressure detecting circuit 30 that is connected to the said load pressure detecting port 28 of each of the said left hand side and right hand side directional control valves 3 and 4 is connected via a high pressure priority valve 31 to the said load pressure introducing path 32, which is in turn connected to the said first pressure receiving portion 11 of each of the pressure compensating valves 9.

Each pressure compensating valve 9 mentioned above, includes, apart from its inlet port 12 and its outlet port 13, a first port 33 and a second port 34. The said first port 33 is connected through each of first paths of communication 35 to one side of the said first circuits 7 and one side of the said second circuits 8, respectively. The said second port 34 is connected through each of second paths of communication 36 to the other side of the said first circuits 7 and to a second port 34 of that pressure compensating valve 9 that is provided in each of the said second circuits 8.

And, when the difference in pressure between the said first pressure receiving portion and a said actuator port is markedly increased to the extent that a communication between the said inlet port 12 and the said outlet port 13 is blocked or substantially blocked, a communication between the said first port and the said second port 34 will be blocked. On the other hand, when the difference in pressure is so low that the said inlet port 12 and the said outlet port 13 may communicate with each other, a communication will be established between the said first port 33 and the said second port 34, thus establishing a communication between the said left hand side first circuit 7 and the said right hand side first circuit 7 or a communication between the said left hand side second circuit 8 and the said right hand side second circuit 8.

Stated otherwise, the said pressure compensating valves 9 have both a function to open and close the path of communication that can communicate the said left hand side first circuit 7 and the said right hand side first circuit 7 with each other and a function to open and close the path of communication that can communicate the said left hand side second circuit 8 and the said right hand side second circuit 8 with each other. Thus, while a communication is established between the said inlet port 12 and the said outlet port 13 of the pressure compensating valves 9 with the area of an opening that is not less than a predetermined value, the said path of communication will be opened. On the other hand, while a communication between the said inlet port 12 and the said outlet port 13 is blocked or substantially blocked, the said path of communication will be closed.

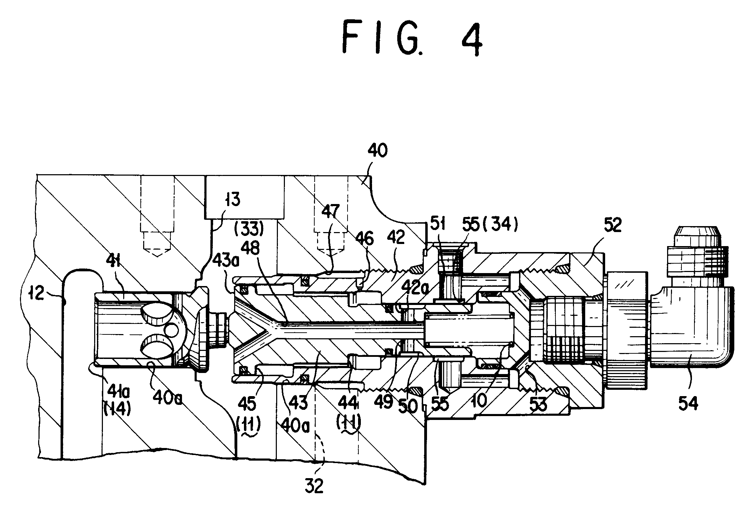

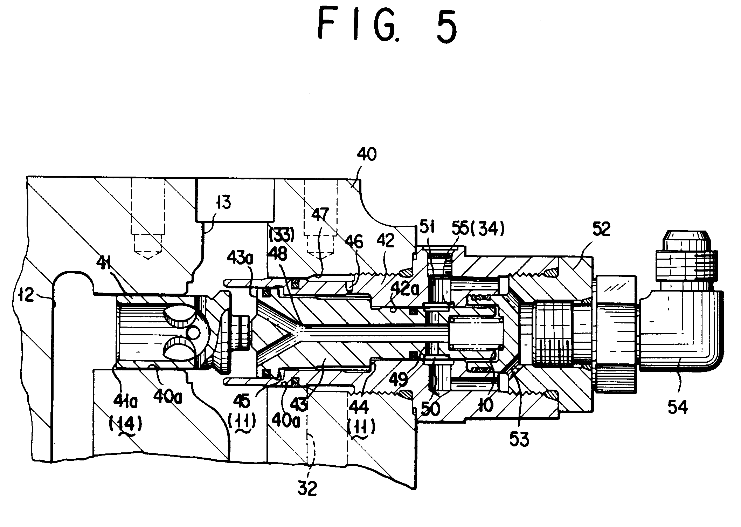

An explanation will now be given with respect to a certain specific structure of a said pressure compensating valve 9 with reference to Figs. 4 and 5.

The pressure compensating valve 9 includes a valve body 40 which is formed therein with a bore 40a having the said inlet port 12, the said outlet port 13 and a load pressure introducing port 47. At its left hand side, the said bore 40a has a valve 41 slidably inserted which acts to establish and block a communication between the said inlet port 12 and the said outlet port 13. At its other side, the said bore 40a has a sleeve 42 inserted in a threaded engagement therewith and in an opposing relationship with a valve 41. And, the said sleeve 42 is provided with an inner circumferential surface 42a, a fine opening 46 that communicates with the said load pressure introducing port 47, an annular recess 55 that is formed in the said inner circumferential surface 42a, and a fluid bore 51. The said fluid bore 51 has its one end that communicates with an elbow 54 via a bore 53 of a spring bearing 52 screwed into the said sleeve 42, and has its other end that is opening to the said annular recess 55, thus constituting the said second port 34. Into the said sleeve 42, a piston 43 is slidably inserted in an opposing relationship with the above mentioned valve 41, the said piston being adapted to be thrusted unidirectionally by the said spring 10 so as to thrust the said valve in a blocking direction.

The above mentioned valve 41 has its end surface 41a that is opening to the said inlet port 12 and which under a pressure applied thereto (i. e. to the said second pressure receiving portion 14) is thrusted in the communicating direction (i. e. rightwards in Fig. 4) so as to communicate the said inlet port 12 with the said outlet port. On the other hand, the said piston 43 under a pressure applied to its first and second stepped portions 44 and 45 (i. e. the said first pressure receiving portion 11) is thrusted unidirectionally so as to thrust the said valve 41 in its blocking direction, whereupon the said valve 41 acts to block a communication between the said inlet port 12 and the outlet port 13. The said first stepped portion 44 of the piston 43 will then communicate through the said fine opening 46 of the sleeve 42 with the said load pressure introducing port 47 of the valve body 40 to allow the said load pressure introducing port 47 to be connected to a load pressure introducing path 32. And, as with a pressure fluid introduced into the said first stepped portion 44 to act on the the said second stepped portion 45, the said first and the said stepped portions 44 and 45 will communicate with each other.

The above mentioned piston 43 is formed about its center with an axial bore 48, whose one end is opening to one end surface 43a thereof, thus constituting the said first port 33 that communicates with the said outlet port 13 so that the pressure fluid at the latter may be allowed to flow into the said axial bore 48 through the said first port 33. It will be noted that a portion of the said axial bore 48 which is closer to the other end thereof is designed to communicate through radially extending bores 49 with an annular recess 50 that is formed in the outer peripheral portion of the said piston 43. And, as shown Fig. 4, when the said valve 41 has been moved to take a position at which a communication between the said inlet port 12 and the said outlet port 13 is blocked, the said piston 43 has been displaced leftwards so as to block a communication between the said annular recess 50 and the said annular recess 55, and hence to block a communication between the said first port 33 and the said second port 34.

And, if the valve 41, as shown in Fig. 5, has had a slide rightwards such as to establish a communication between the said inlet port 12 and the said outlet port 13, the said piston 43 has been thrusted rightwards so as to communicate the said annular recess 50 and the said annular recess 55 with each other and hence to establish a communication between the said first port 33 and the said second port 34.

An explanation will next be given with respect to an operation of the present embodiment of the invention.

When the said left hand side and right hand side directional control valves 3 and 4 lie each at the neutral position N, as shown in Fig. 3, it can be seen that since the said first and second inlet ports 20 and 21 are each blocked whereas the said first and second actuator ports 22 and 23, the said first and second return ports 26 and 27, and the said load pressure detecting port 28 are allowed to communicate with the said reservoir 29, their own load pressure and the maximum load pressure in the said load pressure introducing path 32 will be zero, thus causing each of the said pressure compensating valves 9 by means of the said spring 10 to block a communication between the said inlet port 12 and the said outlet port 13 whilst bringing in a state in which a communication between the said first port 33 and the said second port 34 is blocked.

Each of the said left hand side and right hand side traveling purpose hydraulic motors 5 and 6 will be thereby prevented from being rotated.

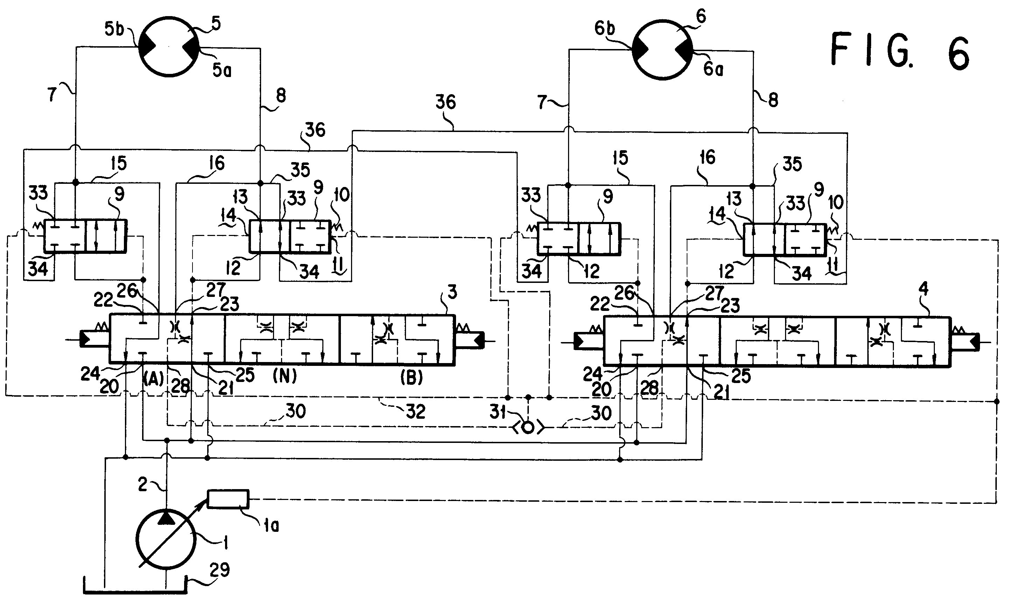

Then, if the said left hand side and right hand side directional control valves 3 and 4 are regulated to take its first position A as shown in Fig. 6, it can be seen that the pressurized discharge fluid from the said hydraulic pump 1 will be passed through the said second inlet ports 21, the said second actuator ports 23, the said pressure compensating valves 9 and the said second circuits 8 to flow into the respective first ports 5a and 6a of the said left hand side and right hand side travelling purpose hydraulic motors 5 and 6. The pressure fluid from the respective second ports 5b and 6b of these hydraulic motors will then be discharged through the said first circuits 7, the said auxiliary circuits 15, the said first return ports 26 and the said reservoir ports 24 into the said reservoir 29.

The pressure acting on each of the second pressure receiving portions 14 of those pressure compensating valves 9 provided in the second circuits 8 will then become the maximum load pressure (i. e. the pressure at the said load pressure introducing path 32) acting on each of the said first pressure receiving portions 11. Thus, since the difference between this pressure and the self load pressure acts to control the area of the opening between the said inlet port 12 and the said outlet port 13, thereby compensating for a pressure at the inlet side, it will be appreciated that the single hydraulic pump 1 can be used to supply its discharge pressure fluid to the respective first ports 5a and 6a of the left hand side traveling purpose hydraulic motor 5 and the right hand side traveling purpose hydraulic motor 6.

At the same time, since the said first port 33 of a said pressure compensating valve 9 provided in a said second circuit 8 is allowed to communicate with the second port 34 corresponding thereto, a communication will be established between the left hand side second circuit 8 and the right hand side second circuit 8, thereby enhancing the ability to allow a vehicle to travel linearly.

At this point it should be noted that if the left hand side and right hand side directional control valves 3 and 4 should each lie at the second position B as shown in Fig. 6, the result is simply the reversed rotation of a said actuator 5, 6, and the operating principle is identical to that in which they are each taken to line at the first position A.

It should further be noted that in a pressure compensating valve 9 as mentioned above, it is also possible to construct the said sleeve 42 in an integration with the said valve body 40.

As set forth in the foregoing description, it will be seen that a communication can be established each between the left hand side and right hand side first circuits 7 and 7 and between the left hand side and right hand side second circuits 8 and 8 by virtue of the development of an open valve state of a said pressure compensating valve 9 that is provided in either of the first circuits 7 and the second circuits 8 when a left hand side travelling purpose hydraulic motor 5 and a right hand side traveling purpose hydraulic motor 6 are to be supplied with a pressurized fluid in order to assume a linear travel of the travelling apparatus. It follows, therefore, that a linearity of travel of the said apparatus can be enhanced owing to the provision of a said pressure compensating valve 9.

It can accordingly be seen that since a pair of travelling purpose valves of communication are made unnecessary, the apparatus will be reduced in cost. In addition, since a circuit tailored for a pilot pressure fluid is made unnecessary, the circuit system itself can be simplified.

While the present invention has hereinbefore been described with respect to certain illustrative embodiments thereof, it will readily be appreciated by a person skilled in the art to be obvious that many alterations thereof, omissions therefrom and additions thereto can be made without departing from the essence and the scope of the present invention. Accordingly, it should be understood that the present invention is not limited to the specific embodiments thereof set out above, but includes all possible embodiments thereof that can be made within the scope with respect to the features specifically set forth in the appended claims and encompasses all equivalents thereof.

## Claims

1. A travelling control circuit for a hydraulically driven type of travelling apparatus, characterized in that it comprises:
a hydraulic pump;
a left hand side directional control valve and a right hand side directional control valve which are provided in parallel to each other in a discharge path of said hydraulic pump;
a pair of a left hand side first circuit and a left hand side second circuit and a pair of a right hand side first circuit and a right hand side second circuit in which the respective output sides of said left hand side and right hand side directional control valves are connected with a left hand side travelling purpose hydraulic motor and a right hand side travelling purpose hydraulic motor, respectively; and
a pressure compensating valve that is provided with each of said first circuits and each of said second circuits for controlling the area of an opening between an inlet port and an outlet port thereof in response to a difference in pressure between a self load pressure and a maximum load pressure of the load pressures of said left hand side and right hand side travelling purpose hydraulic motors, thereby compensating for a pressure in the fluid, and
characterized in that said pressure compensating valves are adapted to have a function, when the pressurized fluid is compensated, to communicate via respective paths of communication between said left hand side and right hand first circuits and between said left hand side and right hand side second circuits, and to have a function, when a communication between said inlet port and said outlet port is blocked or substantially blocked, to block a communication between said left hand side and right hand side first circuits and a communication between said left hand side and right hand side second circuits, respectively.

2. A travelling control circuit for a hydraulically driven type of travelling apparatus, as set forth in claim 1, characterized in that each of said pressure compensating valves comprises:
a valve body;
a bore formed in said valve body and having a first port and a second port for establishing a communication between said inlet port and said outlet port and a communication between a load pressure introducing port and said outlet port;
a valve adapted to be slidably inserted into said bore for establishing and blocking a communication between said inlet port and said outlet port and capable of being thrusted in a direction of the communication under a pressure at said inlet port; and
a piston adapted to be slidably inserted into said bore and capable of thrusting under a pressure at said load pressure introducing port and under a resilient force by a spring said valve in its blocking position and capable of being thrusted in the other direction by said valve, and
characterized in that:
said piston is so configured that when it has had a slide to its displacement end and substantially to its displacement end in said first mentioned direction it may block a communication between said first port and said second port and when it has been thrusted by a predetermined distance in the second mentioned direction it may establish a communication between said first port and said second port.

3. A travelling control circuit for a hydraulically driven type of travelling apparatus, as set forth in claim 20, characterized in that said piston is formed therein with a passage of communication for establishing a communication between said first port and said second port when such a communication is to be established therebetween.
